# EUROPEAN PATENT APPLICATION

(11) **EP 1 724 300 A1**
(43) Date of publication of application: **22.11.2006**
(21) Application number: 05710643.7
(22) Date of filing: 24.02.2005
(51) Int. Cl.: C08L 1/00, B29B 7/38, B29B 7/84, B29B 9/12, B29C 47/00, B29C 55/28, C08K 5/09, C08L 3/00, C08L 101/00, C08L 23/26

(54) **STARCH-BLENDED RESIN COMPOSITION, MOLDING THEREOF AND PROCESS FOR PRODUCING THE SAME**

(30) Priority: 10.03.2004 JP 2004066466; 20.05.2004 JP 2004150995; 09.07.2004 JP 2004203732
(71) Applicant: Agri Future Joetsu Co., Ltd., 1, Tatsuoshinden Oaza, Joetsu-shi, Niigata 9430132 (JP)
(72) Inventor: UEDA, Minoru, c/o AGRI FUTURE JOETSU CO., LTD., Oaza, Joetsu-shi, Niigata 9430132 (JP); OHNO, Takashi, c/o AGRI FUTURE JOETSU CO., LTD., Oaza, Joetsu-shi, Niigata 9430132 (JP); SATO, Jun, c/o AGRI FUTURE JOETSU CO., LTD., Oaza, Joetsu-shi, Niigata 9430132 (JP); SAKAGUCHI, Kazuhisa, AGRI FUTURE JOETSU CO., LTD., Oaza, Joetsu-shi, Niigata 9430 132 (JP)
(74) Representative: Strehl Schübel-Hopf & Partner
(86) International application number: PCT/JP2005/002992
(87) International publication number: WO 2005/087857

(57) **Abstract**

The object is to efficiently utilize a starch substance among surplus agricultural product, and the present invention relates to a technique for blending the starch substance with a thermoplastic resin. The purpose of the present invention is to provide a starch resin composition which retains various properties of the thermoplastic resin even when the starch substance is blended in a large amount.

There is provided a starch resin composition comprising 5 - 95 parts by weight of the thermoplastic resin (X), 95 - 5 parts by weight of starch substance (Y), and 0.2 - 20 parts by weight of a compatibilizer (Z) which improves an affinity at an interface between the thermoplastic resin (X) and the starch substance (Y), relative to 100 parts by weight of a total amount of the components (X) and (Y), and a technique associated with the starch resin composition.

## Description

### Field of the invention

The present invention relates to a technique for blending a starch substance with a thermoplastic resin for a purpose of efficiently utilizing surplus agricultural product, and particularly to a starch resin composition exhibiting excellent moldability and mechanical properties, and to a technique associated therewith.

### Background art

Generally, surplus of agricultural crops produced for human consumption can be stored for a certain period of time. However, surplus is to be discarded after its best-before date. In order to reduce an amount of the disposed or stored surplus, attempts have been made to efficiently utilize agricultural products in alternative fields, other than a field of food.

A technique has been already developed and conventionally performed, in which a starch substance as an agricultural product is blended with a thermoplastic resin to prepare a starch resin composition and the starch resin composition is subjected to mold processing. In such a conventional technique for producing a starch resin composition, in order to prevent lowering in mechanical strength and appearance of a molded product that may be caused by introducing the starch substance, the starch substance to be blended is a pulverized agricultural product or an extracted starch ingredient from an agricultural product, for improving an affinity and dispersibility to the thermoplastic resin (see, for example, Patent Document 1).
(Patent Document 1)
Japanese Unexamined Patent Publication Kokai No. 2004-2613 (paragraphs 0046 - 0050)

### Disclosure of the invention

### Problem to be solved by the invention

In the conventional technique, it is necessary to subject the starch substance to be blended to preprocessing as mentioned above that takes an immense amount of effort, and as a result, production cost becomes high. Accordingly, no starch resin composition has been provided at reasonable cost with a disposal of a large amount of surplus agricultural product.

Moreover, with a molded product using the conventional starch resin composition, the following problems in quality have been pointed out.

First, the starch substance generally has a high hygroscopicity, and after blended with the thermoplastic resin and formed into a molded product, the starch substance still absorbs moisture and swells, leading to a problem of lacking stability over time in various properties (such as dimensional stability) of the molded product. In addition, another problem arises in that, when the molded product formed of such a starch resin composition is immersed in an aqueous solution, the starch component is eluted and leaves a slimy surface.

Second, when the conventional starch resin composition is drawn and a film is formed, various disadvantages may arise, including uneven film thickness, cracks starting from starch particles, poor texture, poor appearance, poor mechanical properties after molded and the like. Therefore, it is difficult to obtain an excellent film product, and the above-mentioned disadvantages become notable especially when a thinner film is produced.

The reason for the disadvantages is that, for example, starch particles are not evenly dispersed in the starch resin composition, or a diameter of the starch particle is large relative to the film thickness. However, with the above-mentioned scheme (pulverization or extraction), there are limitations on obtaining fine starch particles from the starch substance. In addition, the thermoplastic resin (e.g. polyolefin resin) has a poor affinity for the starch substance (e.g. rice), and therefore, even though preprocess was conducted to provide fine starch particles, the starch particles are likely to make agglomeration when introduced to the thermoplastic resin in a thermal fluid form. No consideration had been given to the above-described unfavorable properties in the conventional starch resin compositions, and thus a thinner film product having excellent properties has not been realized.

The present invention is made with a view towards solving the above-mentioned problems, and the object is to make a fine starch substance dispersed in and blended with a matrix of a thermoplastic resin, to thereby provide an excellent starch resin composition and a technique associated therewith.

### Summary of the invention

The present invention is made with a view towards attaining the above-mentioned object, and in one aspect of the present invention, there is provided a starch resin composition comprising: 5 - 95 parts by weight of a thermoplastic resin (X) ; 95 - 5 parts by weight of a starch substance (Y); and 0.2 - 20 parts by weight of a compatibilizer (Z) which improves an affinity at an interface between the thermoplastic resin (X) and the starch substance (Y), relative to 100 parts by weight of a total amount of the components (X) and (Y).

In another aspect of the present invention, there is provided a method for producing a starch resin composition comprising: a material feeding step in which a starting material containing at least a thermoplastic resin (X) and a water-containing starch substance (Y) is fed into a material feeding part of a kneading extruder kept at 140°C or less; a thermal fluidization treatment step in which the starting material fed is sent to a high-temperature high-pressure part kept at higher pressure than an atmospheric pressure and at higher temperature at which the thermoplastic resin (X) is fluidized to be a water-containing thermal fluid form, and at least a part of the starch substance (Y) present in the water-containing thermal fluid form is gelatinized as gelatinized starch; a dispersion treatment step in which the water-containing thermal fluid form is kneaded similarly at high temperature and high pressure to gelatinize the rest of the starch substance (Y) and to crush the resultant gelatinized starch as starch particles, and the starch particles are dispersed entirely in the water-containing thermal fluid form to give a starch-dispersed thermal fluid form; a dehydration treatment step in which the starch-dispersed thermal fluid form is sent to a degassing part kept at an atmospheric pressure or lower and at high temperature at which the starch-dispersed thermal fluid form is fluidized, and water contained in the starch-dispersed thermal fluid form is evaporated to give an anhydrous thermal fluid form; a discharge step in which the anhydrous thermal fluid form is discharged from a discharge opening of the kneading extruder; and a molding step in which the discharged anhydrous thermal fluid form is solidified and molded at low temperature at which a thermal fluidity is lost.

### Effect of the invention

The starch resin composition, the molded product using the same and the method for producing the same of the present invention exhibit the following excellent effects.

Since the fine starch substance (Y) is evenly dispersed in the thermoplastic resin (X) as a matrix, the starch resin composition exhibits excellent mechanical properties and appearance. Especially, a film product produced from the starch resin composition has almost the same quality as a film product obtained using 100% of thermoplastic resin (X).

Since the starch substance (Y) is chemically treated with the compatibilizer (Z), a molded product of the thermoplastic resin composition exhibits stable properties over time. Therefore, a ratio of the starch substance (Y) to be blended can be made high, and a large amount of surplus agricultural product is efficiently utilized, which reduces a usage of the thermoplastic resin (X) produced from fossil fuels. In addition, the molded product containing the starch resin composition contributes to conservation of global environment, since the molded product generates small amounts of combustion heat and carbon dioxide when burnt, and the molded product is decomposed 100% due to biodegradability thereof when subjected to landfill disposal.

### Description of the preferred embodiment

Embodiments of the present invention will be described in detail below.

With respect to a thermoplastic resin (X) as a material to form a matrix of a starch resin composition of the present invention, typical examples include polyolefin resin, such as low-density polyethylene (LDPE), high-density polyethylene (HDPE) and polypropylene (PP); and ethylene copolymer, such as ethylene-vinyl acetate copolymer (EVA) and ethylene-ethyl acrylate copolymer (EEA).

In addition, polycarbonate resin (PC), polyethylene terephthalate resin (PET) and acryl butylene stylene (ABS) may be used. However, there is no limitation as long as the resin is fluidized when heated. Two or more of the above-mentioned thermoplastic resins may be used in combination.

For the thermoplastic resin (X), there can be mentioned resins having biodegradability, such as polyolefin, polyester, polylactic acid (PLA), polybutylene succinate (PBS), polycaprolactone (PCL), polyhydroxy butylate (PHB), polyvinyl alcohol (PVA) and copolymers thereof, polyamide (PA), cellulose acetate, polyaspartic acid, and polysaccharide derivatives. The starch resin composition containing such a thermoplastic resin (X) is suitable from a viewpoint of environmental conservation, since a whole part of the starch resin composition is decomposed to soil when subjected to landfill disposal. Likewise, the starch resin composition containing a thermoplastic resin (X) to which additives that give biodegradability are added, such as DE-GRANOVON (trademark) and ECM master batch (product name) by MacroTech Research, Inc (the United States), is suitable from a viewpoint of environmental conservation.

Examples of the starch substance (Y) to be used as a material blended in the starch resin composition of the present invention includes rice, wheat, corn, potato, sweet potato and tapioca. However, the material is not limited to these as long as the agricultural product contains starch. The starch substance (Y) may be used directly from storage, or used after a simple preprocess, such as washing, removing portions containing no starch, such as outer skin, and cutting into appropriate pieces.

With respect to the starch substance (Y) to be used as a material, it is more preferred that an α-conversion process be conducted in the following manner, after the simple preprocess. Specifically, starch composing the starch substance (Y) initially has a crystal structure (β-structure). When placed at 70°C or more in a presence of an appropriate amount of water, the β-structure collapses and turns into a noncrystalline structure (α-structure). This conversion from β-structure to α-structure caused in water-absorbed raw starch by heating is called "gelatinization". As compared with the initial starch particles having β-structure i.e. in a state to be heated (raw state), the starch particles having α-structure in the gelatinized starch substance (Y) are more likely to be loosened at starch molecular level and become finely dispersable in the thermoplastic resin (X) fluidized by heat.

Examples of specific processes for converting the structure of starch from β-structure to α-structure include a heating treatment generally conducted for processing food, such as immersing and boiling a material in water, steaming a material with water vapor and the like.

It is known that there is a phenomenon in which, when water-containing starch having α-structure as a noncrystalline state is left at low temperature, the starch regains β-structure as a crystalline state over time (also called "aging"). On the other hand, it is also known that, when water is removed from the starch having α-structure as a noncrystalline state, even though the starch is left at low temperature for a long period of time, the starch retains α-structure and does not regain β-structure (does not undergo aging).

Therefore, the starch substance (Y) to be used as a material in the present invention includes starch having α-structure (noncrystalline structure), in both a water-containing state and a dehydrated state. In any way, when the starch structure of the starch substance (Y) to be blended with the thermoplastic resin (X) is α-structure (noncrystalline structure), molecular chains of starch are easily loosened to become finer fragments and easily dispersed in a matrix of the thermoplastic resin (X) during kneading process which will be described below. This effect cannot be obtained when an unheated starch substance (Y) containing starch having β-structure (crystal structure) is blended.

Specifically, a method for obtaining a dehydrated starch substance (Y) having α-structure includes heating a material in a presence of water to gelatinize, and directly reducing a pressure of the atmosphere by a vacuum device. Use of such a dehydrated starch substance (Y) having α-structure will prevent aging, and therefore the starch substance (Y) alone can be stored for a long period of time, contributing to saving time and cost for producing the starch resin composition.

It should be noted that, in water to be used for converting β-structure of starch into α-structure, trehalose is dissolved. The effect of dissolving trehalose is that, for example, when rice is used as the starch substance (Y), an aqueous solution of trehalose is impregnated into raw rice, and trehalose suppresses decomposition of lipid components in rice, resulting in suppression of deterioration over time of a resultant rice-containing thermoplastic resin composition. The reason is believed that trehalose covers rice components and protects fatty acid from oxidative decomposition.

Such an effect is exhibited not only in rice but also in a general starch substance (Y). In addition to the above-mentioned trehalose, examples of the substance exhibiting the effect include salt, sucrose, antioxidant, proteolysis promoter and cellulose degradation promoter. It should be noted that, by blending the starch substance (Y) having α-structure with water containing the above-mentioned substance, the resultant starch resin composition is prevented from having peculiar odor, singe and coloration.

The starch substance (Y) to be blended as a material that has been subjected to α-structure conversion treatment has been described above. In addition, a starch substance (Y) having β-structure that contains water can be also used, a manufacturing method of which will be described below.

Specifically, raw rice is immersed in water for a predetermined period of time, and then drained of water. To a kneader, the impregnated raw rice is introduced together with a thermoplastic resin (X), and the mixture is kneaded at a thermal fluidization temperature of the thermoplastic resin (X). The thermal fluidization temperature (typically 100 - 200 °C) is an enough temperature to convert β-structure of starch of the raw rice into α-structure, and therefore the raw rice is subjected to α-structure conversion treatment during kneading. After the structure of the raw rice is converted into α-structure, molecular chains of starch are loosened to become fine fragments, and dispersed in a matrix of the thermoplastic resin (X), as described above. This production process will be described in detail below with reference to drawings.

In order to convert β-structure into α-structure by heating, it is desired that the raw rice has a water content of 17% or more. To attain this, the raw rice should be immersed in water for 5 minutes or more. In a case of the starch substance (Y) itself containing enough water to convert starch structure into α-structure, such as potato, immersion in water like in a case of rice is not necessary, and the starch substance (Y) can be directly introduced to the kneader.

For the compatibilizer (Z) to be used as a material in the present invention, there can be mentioned a saturated carboxylic acid, an unsaturated carboxylic acid or a derivative thereof, a thermoplastic resin (X) modified with an unsaturated carboxylic acid or a derivative thereof, and a starch substance (Y) modified with an unsaturated carboxylic acid or a derivatives thereof. In addition, oil-modified alkyd resin or a derivative thereof, processed starch or a derivative thereof may be used.

Examples of the saturated carboxylic acid include succinic anhydride, succinic acid, phthalic anhydride, phthalic acid, tetrahydrophthalic anhydride and adipic anhydride. Examples of the unsaturated carboxylic acid include maleic anhydride, maleic acid, nadic anhydride, itaconic anhydride, itaconic acid, citraconic anhydride, citraconic acid, crotonic acid, isocrotonic acid, mesaconic acid, angelic acid, sorbic acid and acrylic acid. Examples of derivatives of a saturated carboxylic acid or an unsaturated carboxylic acid include metal salts, amides, imides or esters of a saturated carboxylic acid or an unsaturated carboxylic acid. In addition, the thermoplastic resin (X) modified with an unsaturated carboxylic acid or a derivative thereof and the starch substance (Y) modified with an unsaturated carboxylic acid or a derivative thereof can be used. These can be obtained by heating and kneading the thermoplastic resin (X) or starch substance (Y), together with an unsaturated carboxylic acid or a derivative thereof, and further a radical generator, in a presence or absence of a solvent. An amount of the unsaturated carboxylic acid or derivatives thereof to be added is preferably 0.1 - 15 % by weight, especially 1 - 10% by weight. For the compatibilizer (Z) preferably used in the present invention, there can be mentioned a thermoplastic resin modified with an unsaturated carboxylic acid or derivatives thereof having no odor and a small acidity, and a starch substance modified with such derivatives.

When the compatibilizer (Z) and the starch substance (Y) to be used in the present invention are mixed and then heated at 100°C - 200°C, they are chemically bonded through esterification as shown by the formula below. As a result of this reaction, an ester group is substituted for a hydroxide group having a high hydrophilicity in the starch substance (Y), and therefore a high hygroscopicity of the starch substance (Y) is suppressed. Moreover, bonding at an interface between the thermoplastic resin (X) and the starch substance (Y) is improved, to thereby lower a viscosity of the thermoplastic resin composition at a kneading temperature, and to improve mechanical strength of the molded product obtained by various moldings.

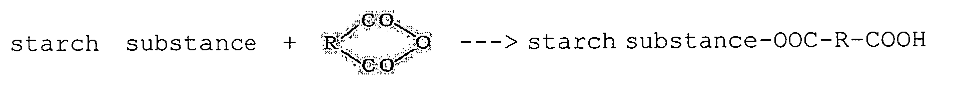

The amount of the starch substance (Y) to be blended is 95 parts by weight at the maximum and 5 parts by weight at the minimum, relative to 100 parts by weight of a total amount of the thermoplastic resin (X) and the starch substance (Y). The reason for setting the maximum to 95 parts by weight is that, if the amount is above this value, the matrix of the rice-containing thermoplastic resin composition is formed of the starch substance (Y), leading to poor mechanical properties in the resultant molded product. The reason for setting the minimum to 5 parts by weight is that, if the amount is below this value, surplus agricultural product cannot be disposed in a large amount.

An amount of the compatibilizer (Z) can be empirically determined, and it is suitable that the amount be in the range of 0.2 - 20 parts by weight, relative to 100 parts by weight of the total amount of the components (X) and (Y).

The present invention relates to a technique for blending the starch substance (Y) as much as possible within the range described above, while the starch-containing thermoplastic resin composition and the molded article retain desirable properties as product. With this technique, overstocked agricultural product that has been hardly disposed can be efficiently disposed in a large amount, and a usage of the thermoplastic resin (X) produced from fossil fuels can be reduced. In addition, the molded product of the starch-containing thermoplastic resin in which the starch substance (Y) of a high ratio is blended remains as ash when burnt after use, and therefore the molded product generates small amounts of combustion heat or carbon dioxide, contributing to conservation of global environment. In a case when the molded product is subjected to landfill disposal, a rate of decomposition to soil is high and such a molded product is environmentally-friendly.

### (Production method)

A method for producing the starch resin composition of the present invention will be described below with reference to the drawings. In the description, an embodiment of a method for producing pellet (starch resin composition) is shown in which the thermoplastic resin (X), the starch substance (Y) and the compatibilizer (Z) are blended with the blending amounts described above.

The thermoplastic resin (X) as a starting material is pellet of polyethylene commercially available, and the starch substance (Y) is raw rice (having β-structure) immersed in tap water (15°C) for a predetermined period of time and drained of water by a centrifugal machine (hereinafter, referred to as "raw rice subjected to water treatment").

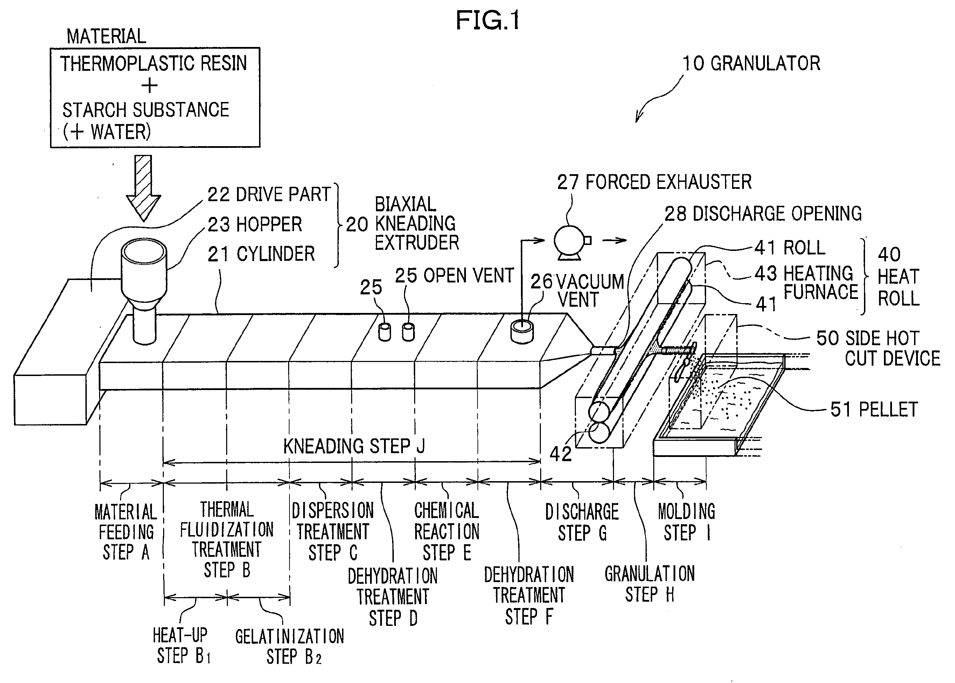

FIG. 1 shows a perspective view of an entire granulator illustrating one example for producing a starch resin composition (pellet 51) of one embodiment of the present invention.

A granulator 10 includes: a biaxial kneading extruder 20 in which the thermoplastic resin (X) and the starch substance (Y) (raw rice subjected to water treatment) as starting materials for the starch resin composition are introduced, thermally fluidized and kneaded; a drive part 22 configured to provide the biaxial kneading extruder 20 with a driving force required for the kneading; a heat roll 40 configured to make starch particles finer by passing a kneaded and extruded thermal fluid form from a discharge opening 28; and a side hot cut device 50 configured to shred the thermal fluid form that passed the heat roll 40 and to compact the shredded thermal fluid form into pellets 51, 51...

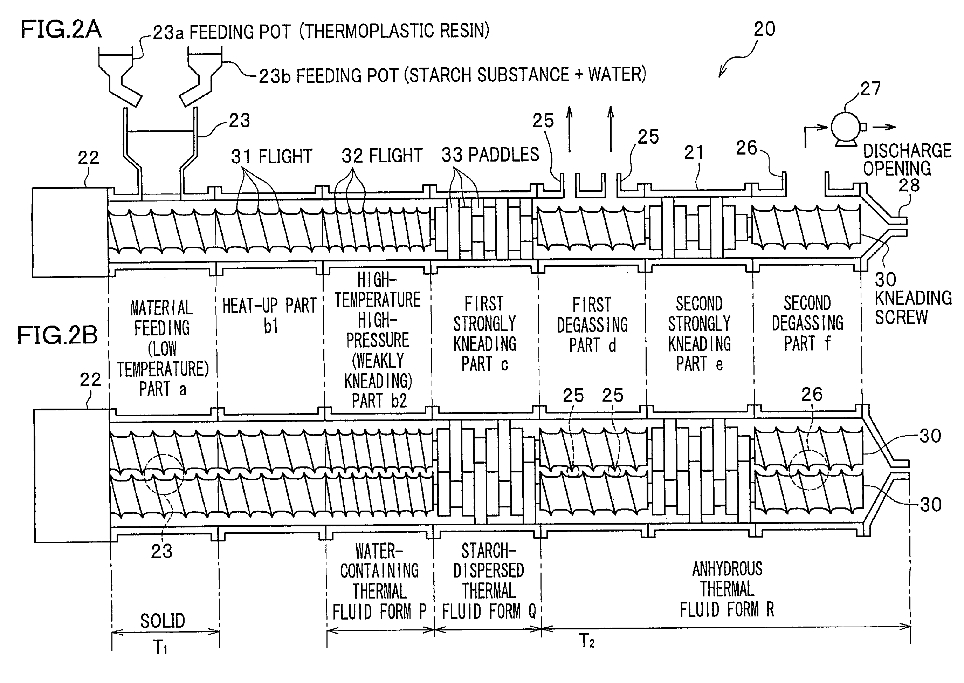

Referring to FIG. 2, the biaxial kneading extruder 20 will be explained. In FIG. 2, (a) shows a sectional side view and (b) shows a horizontal sectional view of the biaxial kneading extruder 20.

A peripheral part of the biaxial kneading extruder 20 is formed of a hollow cylinder 21. In the hollow space of the cylinder 21, there are provided two kneading screws 30, 30 which rotate in the same direction by a driving force of the drive part 22, while engaging to each other. On the most upstream part of the biaxial kneading extruder 20 on which the drive part 22 is provided, a hopper 23 for introducing starting materials is provided. In addition, above the opening of the hopper 23, there are disposed a feeding pot 23a for feeding the thermoplastic resin (X) as a starting material to the hopper 23, and a feeding pot 23b for feeding the raw rice subjected to water treatment (starch substance (Y)) as a starting material to the hopper 23.

The thermoplastic resin (X) and the starch substance (Y) (raw rice subjected to water treatment) as starting materials are fed from the feeding pot 23a and the feeding pot 23b, respectively, to the hopper 23, in the predetermined blending ratio described above. It should be noted that, the compatibilizer (Z) may be blended in this feeding step to the hopper 23 or in later steps.

As shown in FIG. 1, in order to obtain the starch resin composition (pellets 51, 51...) with the granulator 10, it is necessary to conduct a plurality of steps including a material feeding step A, a thermal fluidization treatment step B, a dispersion treatment step C, dehydration treatment steps D and F, a chemical reaction step E, a discharge step G, a granulation step H and a molding step I, sequentially. Among these steps, the steps A - F are performed in a plurality of sections at a predetermined interval along a longitudinal direction of the biaxial kneading extruder 20, as shown in FIG. 2.

In the material feeding step A (see FIG. 1), the starting material (a mixture of at least a thermoplastic resin (X) and raw rice subjected to water treatment (starch substance (Y))) of the starch resin composition are introduced from the hopper 23 to a section of the biaxial kneading extruder 20 indicated with a material feeding part (low temperature part) a (see FIG. 2). The starting material is transported to a heat-up part b1 downstream adjacent to the first section by a flight 31 helically arranged with a predetermined pitch on the kneading screws 30, 30 rotating in the same direction. Since a temperature T₁ of the material feeding part (low temperature part) a is kept at low temperature, such as 140 °C or less (preferably 100 °C or less), most part of water contained in raw rice (starch substance (Y)) fed does not evaporate immediately in the material feeding step A.

The thermal fluidization treatment step B (see FIG. 1) can be further divided into a heat-up step B1 and a gelatinization step B2. In the heat-up step B1, the starting material (the mixture of at least the thermoplastic resin (X) and the raw rice subjected to water treatment (starch substance (Y))) is transported from an upstream to a downstream of a section of the biaxial kneading extruder 20 indicated with the heat-up part b1 (see FIG. 2), while a temperature is raised from the temperature T₁ to a fluidizing temperature T₂ (preferably 120°C - 200°C) at which the thermoplastic resin (X) is fluidized.

In the following descriptions, the term "fluidizing temperature T₂" will appear frequently for indicating temperatures of sections (a - f) of the biaxial kneading extruder 20. However, the material has a predetermined range of temperature for thermal fluidization of the material, and thermal fluidization temperatures T₂ indicated as temperatures for the respective sections (a - f) are not the same. As a matter of course, a preset temperature for each of the sections (a - f) should be appropriately selected so that each step are optimally performed.

In the gelatinization step B2 (see FIG. 1), the rice fed as a material is gelatinized in a section of the biaxial kneading extruder 20 indicated as a high-temperature high-pressure part (weakly kneading part) b2 (see FIG. 2). The high-temperature high-pressure part (weakly kneading part) b2 is maintained at a thermal fluidization temperature T₂ from an upstream portion to a downstream portion thereof. Further, a pitch of the flights 32, 32...helically arranged on the corresponding kneading screws 30, 30 is made narrower than the pitch of the flights 31, 31... on the upstream side. With this configuration, in the high-temperature high-pressure part b2, the material is weakly kneaded, since the pitch is narrower and the occupied space becomes smaller, and moreover, the material as a whole is thermally fluidized. Furthermore, an interior surface of the cylinder 21 at the high-temperature high-pressure part b2 is completely secluded from an external air, and in addition, the upstream and downstream sides are both sealed by the material. Therefore, the interior space of the high-temperature high-pressure part b2 is completely sealed, leading to higher pressure than atmospheric pressure. In the high-temperature high-pressure part b2, water placed under such a high pressure atmosphere can remain a liquid state without vaporizing even at high temperature (100°C or more) . The raw rice impregnated with water at such a high temperature, i.e. thermal fluidization temperature T₂, is gelatinized and converts β-structure into α-structure, in a short period of time.

In the high-temperature high-pressure part b2, a large amount of water is present in a form of liquid even at high temperature, i.e. thermal fluidization temperature T₂ (typically 120 - 200°C). Therefore, β-structure of starch of the raw rice can be converted into α-structure in a short period of time. In this gelatinization step B2, the material placed at high temperature and under high pressure is impregnated with a large amount of water and thermally fluidized, to form a water-containing thermal fluid form P. The raw rice (starch substance (Y)) contained in the water-containing thermal fluid form P can be gelatinized in a short period of time, during kneading.

Next, in the dispersion treatment step C (see FIG. 1), the gelatinized rice (gelatinized starch) contained in the water-containing thermal fluid form P is crushed and dispersed in a section of the biaxial kneading extruder 20 indicated as a first strongly kneading part c (see FIG. 2). The first strongly kneading part c is maintained at the thermal fluidization temperature T₂, from an upstream to a downstream thereof. A plurality of paddles 33, 33... are provided in place of the kneading screws 30, 30.

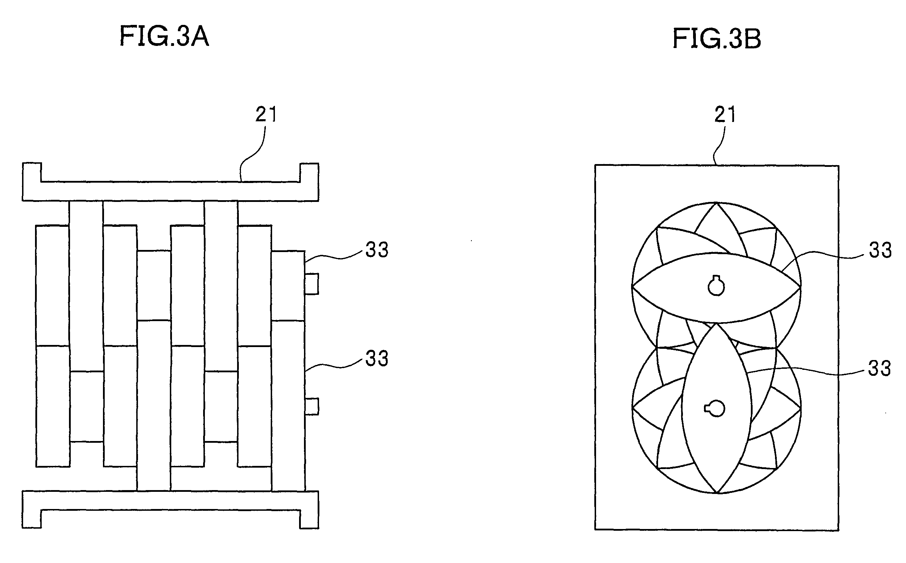

In FIG. 3, (a) shows an enlarged top view of laminated paddles 33, 33... provided on the kneading screws 30, 30 (see FIG. 2), and (b) shows a view seen from an axial direction of the cylinder 21.

Configurations and actions of the paddles 33, 33... will be explained below.

The paddles 33, 33... are arranged in such a manner that an angle which the paddle 33 of one kneading screw 30 forms with the corresponding paddle 33 of the adjacent screw becomes 90°, and that an angle which the paddle 33 formed with the adjacent paddle 33 in a longitudinal direction of the kneading screw 30 sequentially becomes 45°.

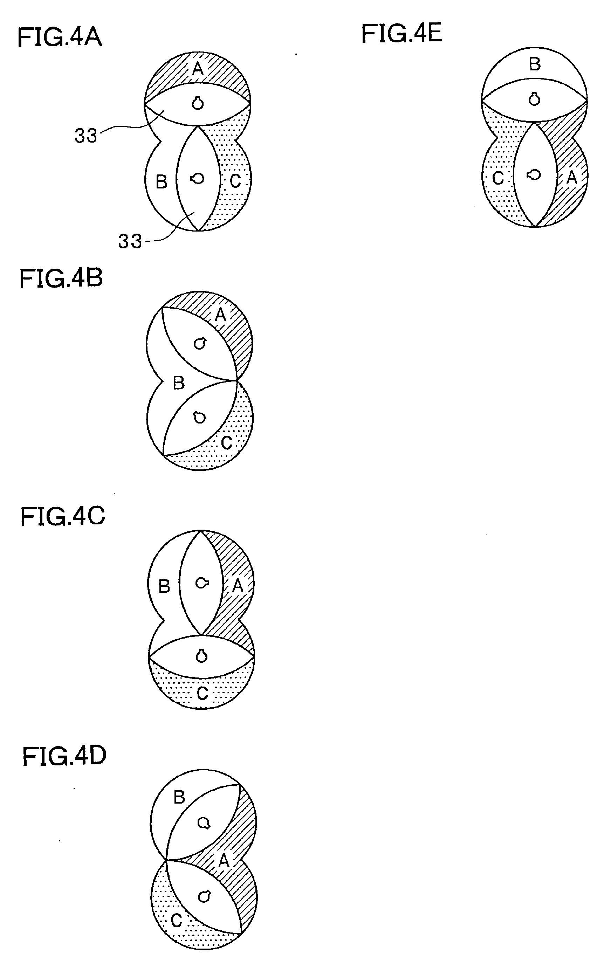

FIG. 4 shows actions of a pair of paddles 33, 33... each provided on the respective adjacent kneading screws 30, 30. (a) - (e) show states captured at every 45° rotation of the kneading screws 30, 30 rotating in the same direction.

As is apparent from FIG. 4, kneaded matters present in the regions indicated with A, B and C are strongly kneaded along an inner periphery of the cylinder 21, as the kneading screws 30, 30 rotate. Returning to the description of the production process of the starch resin composition, in the high-temperature high-pressure part b2, the raw rice is gelatinized (β-structure is converted to α-structure) and transported to the first strongly kneading part c. Since the gelatinized rice (starch substance (Y)) is in a state of gel, when the gelatinized rice is strongly kneaded, molecular chains of starch are loosened, starch particles become fine fragments at molecular level, and are dispersed in the matrix of the thermoplastic resin (X) (giving a starch-dispersed thermal fluid form Q).

The reason for this tendency of the gelatinized starch (having α-structure) becoming finer is that, the molecular structure is likely to be loosened at molecular chain level due to noncrystalline structure thereof. Since an internal pressure of the first strongly kneading part c is kept higher than an atmospheric pressure, the rest of the raw rice that was not gelatinized in the high-temperature high-pressure part b2 is gelatinized, becomes finer, and is dispersed. It should be noted that it is impossible to make starch particles finer to the molecular level for dispersing in the matrix, with a use of the conventional granulating method in which a starch substance having β-structure is pulverized.

In the dehydration treatment step D (see FIG. 1), water is removed from the starch-dispersed thermal fluid form Q to thereby obtain an anhydrous thermal fluid form R in a section of the biaxial kneading extruder 20 indicated as a first degassing part d (see FIG. 2). The first degassing part d is retained at the thermal fluidization temperature T₂. An upper part of the cylinder 21 of the first degassing part d has open vents 25, 25 opened to the atmosphere. Due to a presence of the open vents 25, 25, an internal pressure of the first degassing part d becomes the atmospheric pressure, and the starch-dispersed thermal fluid form Q transported from the first strongly kneading part c on an upstream side is exposed to a drastic pressure loss. As a result, water contained in the material is instantaneously evaporated and exhausted from the open vents 25, 25, which gives an anhydrous thermal fluid form R.

In this manner, in the dehydration treatment step (D), water contained in the starch substance (Y) and contributed to gelatinization finishes its role and is exhausted. Essentially, water is an unnecessary component for a starch resin composition as a final product.

In the chemical reaction step E (see FIG. 1), the compatibilizer (Z) as one material to be added when necessary is chemically modified, to thereby enhance an affinity of the thermoplastic resin (X) for the starch substance (Y) and improve dispersibility, in a section of the biaxial kneading extruder 20 indicated as a second strongly kneading part e (see FIG. 2). The second strongly kneading part e is retained at the thermal fluidization temperature T₂. The anhydrous thermal fluid form R passing through this part is strongly kneaded again, and particles of the gelatinized starch becomes much finer. In addition, the added compatibilizer (Z) is chemically reacted. In general, the starch substance (Y) is hydrophilic and the thermoplastic resin (X) is hydrophobic, and thus the affinity at an interface therebetween is usually low. However, the chemical reaction improves the affinity, which in turn improves dispersibility.

In the dehydration treatment step F (see FIG. 1), water remaining in the anhydrous thermal fluid form R is further removed by a forced exhauster 27 in a section of the biaxial kneading extruder 20 indicated as a second degassing part f (see FIG. 2). An upper part of the cylinder 21 of the second degassing part f has a vacuum vent 26 opened to the atmosphere, and on the vent 26, the forced exhauster 27 is disposed. By driving the forced exhauster 27, an internal pressure becomes atmospheric pressure or less, and the remaining water, not completely removed in the dehydration treatment step D, is removed from the anhydrous thermal fluid form R.

Next, in the discharge step G (see FIG. 1), the anhydrous thermal fluid form R is discharged from the discharge opening 28 which has a narrow bore diameter at the most downstream end of the cylinder 21.

In the granulation step H, by passing the discharged anhydrous thermal fluid form R through the heat roll 40, starch particles are made much finer. A pair of rolls 41, 41 is arranged in such a manner that longitudinal axes thereof are parallel to each other, and the rolls 41, 41 are rotating on the respective axes. A gap 42 formed between the pair of cylindrical rolls 41, 41 is appropriately adjusted based on a target size of the starch particles. In addition, rotational direction and speed of the rolls 41, 41 are empirically determined so as to give finer starch particles most efficiently. Moreover, the pair of rolls 41, 41 as a whole are contained in a heating furnace 43 so that a surface temperature can be retained at the thermal fluidization temperature T₂.

In FIG. 1, the heat roll 40 is composed of a pair of rolls 41, 41. However, the present invention is not limited to this configuration, and the heat roll may be composed of a combination of a rotating roll and a flat plate. Specifically, in the heat roll 40, the anhydrous thermal fluid form R is passed through a gap 42 formed between an outer periphery of a single rotating roll 41 and a surface of a different object, and the contained starch particles are made much finer by squashing with the outer periphery or crashing with a shearing force:

The molding step I may be performed in various embodiments, and FIG. 1 illustrates a step of granulating the starch resin composition into pellets 51, 51..., with a use of a conventional side hot cut device 50.

In FIG. 1, a shredding process is performed in the side hot cut device 50 after the composition passed the heat roll 40. However, the shredding process may be performed on the anhydrous thermal fluid form R directly led from the discharge opening 28 of the biaxial kneading extruder 20, without passing the heat roll 40.

In the method for producing a starch resin composition described above, the compatibilizer (Z) to be blended may be added in the material feeding step A shown in FIG. 1 or may be added through a feed opening (not shown) in any one of the steps B - E. Even in a case where no compatibilizer (Z) is blended, unique effects are attained with the method for producing a starch resin composition.

The detailed description above is for the method for producing a preferred starch resin composition in a case where the starch substance (Y) as the material has β-structure and contains water, and the method is illustrated with raw rice subjected to water treatment. However, the starch substance (Y) that can be used in the method described above is not limited to the raw rice subjected to water treatment, and corn, potato and the like that innately contains enough water for undergoing α-conversion process can be directly used.

The starch resin composition of the present invention can be produced with devices other than biaxial kneading extruders as shown in FIG. 1. Especially, in a case where the starch substance (Y) containing starch underwent α-conversion process in advance is used, the starch resin composition can be obtained by heating and kneading the starch substance (Y) together with the thermoplastic resin (X) and the compatibilizer (Z) as main materials, with a use of general devices (e.g. blender, kneader, mixing roll, Banbury mixer, uniaxial or biaxial extruder).

In this case, heating and kneading is performed under general conditions. Specifically, the thermoplastic resin (X), the starch substance (Y), the compatibilizer (Z), and if necessary other component (such as a biodegradability imparting agent), are mixed in appropriate amounts as described above, and the mixture is heated and kneaded at 130 - 200 °C for 20 seconds - 30 minutes. By introducing such a heating and kneading step, chemical reactions progress, to thereby obtain a starch resin composition having desired properties.

In other words, in the matrix of the thermoplastic resin (X), molecular chains of the starch substance (Y) having α-structure are loosened, and at the same time, the interface thereof is modified due to chemical reaction with the compatibilizer (Z), and thus the molecular chains are dispersed throughout the matrix. As a result, the starch substance (Y) becomes fine fragment and is evenly dispersed in the matrix of the thermoplastic resin (X) in a thermal fluid form. The starch resin composition of the present invention is prepared by shaping the thermal fluid form into pellets and cooling to a room temperature.

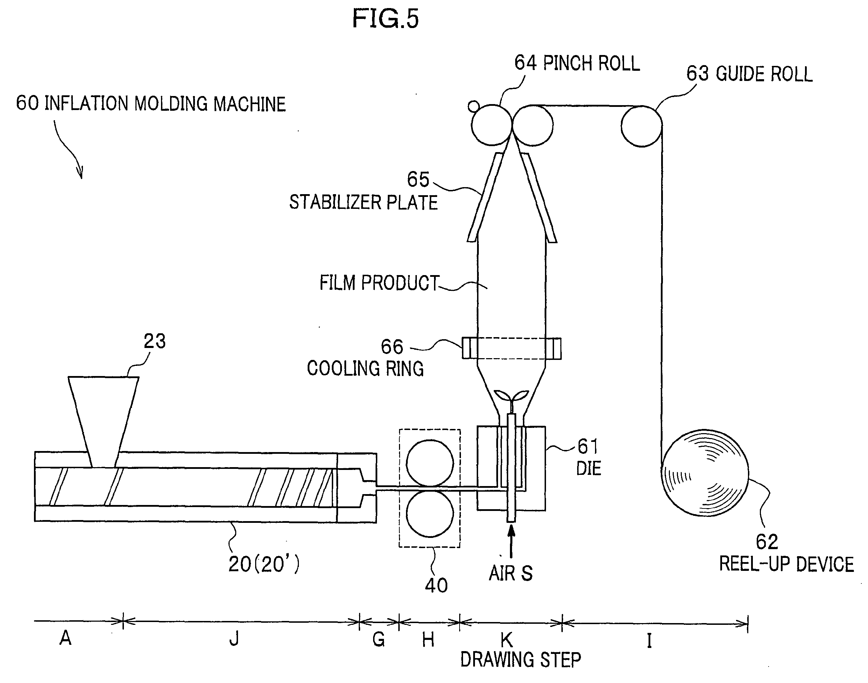

FIG. 5 illustrates another embodiment of the molding step, in which a step for obtaining cylindrical thin film product is shown with a use of an inflation molding device 60. In FIG. 5, for a component already described above, the same reference number is assigned and the description is omitted.

An inflation molding is a method including kneading a material by a biaxial kneading extruder 20 equipped with a mold having an annular mouthpiece (die) 61 (kneading step J), extruding a thermal fluid form in a shape of a cylinder (discharge step G), blowing air into the cylindrical article to draw the article (drawing step K), cooling by a cooling ring 66 and forming a cylindrical thin film product (molding step I), guiding the product by a stabilizer plate 65, passing the product through pinch rolls 64 to expel air inside, passing the product along a guide roll 63, and winding up the product with a take-up device 62.

According to the inflation molding, a resin thin film is formed by biaxial drawing. Therefore, the film exhibits excellent mechanical properties, such as tensile strength and impact resistance. Further, the inflation molding has been widely employed for producing wrap, bag and the like made of thermoplastic resin, such as polyethylene and polypropylene, since the film product is formed as a continuous cylinder.

According to the method for producing the film product of the starch resin composition of the present invention, even when air is blown into the thermally fluidized resin to rapidly inflate the resin, the film is drawn evenly with a uniform thickness, since the starch particles are made finer and evenly dispersed, and there is no defects that may be present if the starch particles form agglomeration. Therefore, as if the film product is produced with 100% of thermoplastic resin (X), the resultant film product after cooling has an even thickness, an excellent appearance and mechanical properties (such as tensile strength), such as no generation of cracks or pin-holes even when a degree of drawing is enhanced.

In the description referring to FIG. 5, explanation is made with the biaxial kneading extruder 20 that was described in details in FIG. 2 and the like. The predetermined properties of the film product described above can be attained also with a common kneading extruder 20' having a heat roll 40. In a case of the inflation molding device 60 equipped with a common kneading extruder 20', the film product having the excellent properties as described above can be also obtained by introducing pellets 51, 51... formed with the granulator 10 of FIG. 1.

The molded product obtained using the starch resin composition of the present invention as described above exhibits excellent mechanical strength, such as tensile strength and bending strength, since the starch substance (Y) that is made fine is evenly dispersed in the matrix of the thermoplastic resin (X) as a component. This is due to the effect of improving bonding at the interface between the thermoplastic resin (X) and the starch substance (Y) as a result of action of the compatibilizer (Z), and the effect of even dispersion of fine starch into the matrix as a result of blending the starch substance (Y) having α-structure.

In addition, in a case of the starch resin composition of the present invention, since chemical reaction of the mixed components are performed by heating and kneading at the melting temperature of the thermoplastic resin (X), the product can be directly subjected to the molding step for obtaining a molded product. Accordingly, the step of producing the starch resin composition and the step of producing the molded product can be continuously performed, and therefore the production cost can be reduced.

In addition, the molded product of the starch resin composition can be obtained by heating and mixing 5 - 80 parts by weight of the starch resin composition of the present invention with 95 - 20 parts by weight of the thermoplastic resin (X), and employing an arbitral blending ratio of the starch substance (Y) in the above-mentioned range.

Accordingly, by preparing and storing in advance the starch resin composition containing a high ratio of the starch substance (Y), a small lot production of various kinds of molded products each having a different blending ratio of the starch substance (Y) can be performed without increasing production cost.

It should be noted that the molded product produced using the thermoplastic resin composition of the present invention is not limited to the above-described film product, and can be employed in various fields and products in which the conventional thermoplastic resin has been used. Specifically, the product is suitably employed in fields of electrical insulating material, industrial part material, material for building construction and the like, and especially as materials for housing member, building materials, and materials for home electric appliances.

Further, examples of the molded product include, in addition to the above-mentioned film, tray, tableware, speaker, bath unit floor member, bucket, toilet seat, cabinet, cabinet for a stereo unit, skirting board, door material, counter material, window frame, sound insulating board, shelf board, block for civil engineering, pole, structural material, kitchen material, floor, bath, backing board, main plate for piano or organ, furniture and ceiling material.

### Examples

Next, Examples of the present invention will be explained. In the following Examples, raw rice subjected to water treatment is used as the starch substance (Y). For Comparative Examples, data was obtained for raw rice not subjected to such a water treatment.

Table 1 shows water contents for different immersion periods of raw rice in water; appearance of the film product obtained from the starch resin composition in which raw rice treated as such is blended; and mechanical properties (tension test data). In the table, Comparative Example in which raw rice without immersing in water is directly blended is also shown. It was found that, as compared with this Comparative Example, all data in Example in which raw rice is immersed in tap water exhibited excellent results. It was also found that the longer the immersion period of raw rice in water was, the more preferable the result became.

Though data is not shown, in a case where raw rice is cooked to have a structure of α-structure, similar data was obtained to data with 120-minute immersion.

The followings are materials used in experiments shown in Table 1 . First, 77% by weight of low-density polyethylene (Evolue SP2520, manufactured by Mitsui Chemicals, Inc.) was used as a thermoplastic resin (X), 20% by weight of polished raw rice (Koshiji Early Paddy produced in Nigata prefecture in 1996) was used as starch substance (Y), 2.2% by weight of maleic acid-modified PP (Yumex 2000 manufactured by Sanyo Kasei Co., Ltd.) was used as a compatibilizer (Z), and 0.8% by weight of a biodegradability imparting agent (MB pellet: MacroTech Research, Inc (USA)) was further added.

The water treatment of raw rice specifically is immersing raw rice in tap water (15 °C) for a predetermined period of time shown in the table, and subjecting to centrifugal dehydration for approximately 3 minutes. As for kneading, a biaxial kneading extruder 20 shown in FIG. 2 was used, with a screw rotational speed of 40rpm, a cylinder temperature T₁ of 90 °C in the material feeding part a, and a temperature T₂ of 150 °C in the later steps. As for producing a film product, a hot press was used at 150 °C under 15 MPa for 2 minutes.

**Table 1**

| | Comparative Example | Example | | | | | |
|---|---|---|---|---|---|---|---|
| Immersion solvent | none | tap water (15°C) | | | | | |
| Immersion period of polished rice (min) | 0 | 5 | 10 | 20 | 40 | 60 | 120 |
| Water content of polished rice after immersion (%) | 12.9 | 17.0 | 20.1 | 22.6 | 27.7 | 30.7 | 30.5 |
| Film appearance (amount of residue) | X | ▲ | ▲ | ▲ | ○ | ○ | ● |
| large-X, medium-▲, small-○, none-● | | | | | | | |
| Tension test: strength (MPa) | 10.0 | 11.0 | 11.3 | 11.2 | 10.7 | 10.9 | 11.2 |
| Tension test: elongation (%) | 13.4 | 20.0 | 26.5 | 30.6 | 35.2 | 39.9 | 72.4 |
| Coloring etc. of pellet (red-brown) strong-X, medium-▲, weak-○, none-● | X | ▲ | ▲ | △ | △ | ○ | ○ |

Table 2 shows appearance and mechanical properties (tension test data) of film products obtained from the starch resin composition containing rice prepared by immersing raw rice in water, a solution in which 1% trehalose (nonreducing sugar manufactured by Hayashibara Co., Ltd.) is dissolved in water, and a solution in which 1% Protin P (protease preparation manufactured by Daiwa Kasei K.K.) is dissolved in water. Table 2 also shows results of cases in which 0% by weight, 2.5% by weight and 5.5% by weight of the compatibilizer was added. As compared with Comparative Example in which no compatibilizer was added, Example in which the compatibilizer was added and raw rice was immersed in a solution in which 1% trehalose or Protin is dissolved exhibited excellent results. It was also found that the larger the amount of the compatibilizer was, the more preferable the result became. With respect to the film product using the compatibilizer in an amount of 5.5%, almost equivalent data was obtained to data with a film formed of 100% polyolefin resin (X) (data not shown).

With respect to the raw rice subjected to immersion treatment with a solution in which trehalose and Protin P are dissolved, it was found that the film product obtained therefrom has a subtle odor.

**Table 2**

| | Comparative Example | Example | | | |
|---|---|---|---|---|---|
| Immersion solvent | tap water (15 °C) | tap water (15 °C) | tap water (15 °C) | tap water (15 °C) trehalose (1%) | tap water (15 °C) Protin (1%) |
| Immersion period of polished rice (min) | 120 | 120 | 120 | 120 | 120 |
| Water content of polished rice after immersion (%) | 30.7 | 30.5 | 30.4 | 31.8 | 32.0 |
| Addition amount of compatibilizer (% by weight) | 0 | 2.5 | 5.5 | 2.5 | 2.5 |
| Film appearance (amount of residue) large-X, medium-A, small-○, none-● | X | ● | ● | ● | ● |
| Tension test: strength (MPa) | 7.2 | 11.7 | 12.3 | 12.1 | 11.5 |
| Tension test: elongation (%) | 18.5 | 199.7 | 224.3 | 210.5 | 187.8 |
| Coloring etc. of pellet (red-brown) strong-X, medium-▲, weak-O, none-● | X | ○ | ○ | ● | ● |

The followings are materials to be used in experiments shown in Table 2.

First, 79.2 - 73.7 % by weight of low-density polyethylene (Evolue SP2150 manufactured by Mitsui Chemicals) was used as a thermoplastic resin (X), 20% by weight of polished raw rice (Koshiji Early Paddy produced in Nigata prefecture in 1996) was used as starch substance (Y), 0 - 5.5 % by weight of maleic acid-modified PP (Yumex 1001 manufactured by Sanyo Kasei Co., Ltd.) was used as a compatibilizer (Z), and 0.8% by weight of a biodegradability imparting agent (MB pellet: MacroTech Research, Inc (USA)) was further added.

Water treatment of raw rice, kneading conditions and production conditions of film product are the same as the conditions in the case of Table 1.

### Brief Description of the drawings

FIG. 1 shows a perspective view of an entire granulator for producing a starch resin composition (pellet) of one embodiment of the present invention.
In FIG. 2, (a) shows a sectional side view and (b) shows a horizontal sectional view of a biaxial kneading extruder to be used in one embodiment of the present invention.
In FIG. 3, (a) shows an enlarged top view of laminated paddles provided on a kneading screw, and FIG. 3(b) shows a view seen from an axial direction of a cylinder.
FIG. 4 shows actions of a pair of paddles each provided on the respective adjacent kneading screws. (a) - (e) show states captured at every 45° rotation of the kneading screws rotating in the same direction.
FIG. 5 shows a front view of an inflation molding machine for producing a film product according to one embodiment of the present invention.

### Description for reference characters

- 20: biaxial kneading extruder (kneading extruder)
- 28: discharge opening
- 30: kneading screw
- 40: heat roll
- 42: gap
- 60: inflation molding machine
- A: material feeding step
- B: thermal fluidization treatment step
- B1: heat-up step
- B2: gelatinization step
- C: dispersion treatment step
- D, F: dehydration treatment step
- E: chemical reaction step
- G: discharge step
- H: granulation step
- I: molding step
- J: kneading step
- K: drawing step
- P: water-containing thermal fluid form
- Q: starch-dispersed thermal fluid form
- R: anhydrous thermal fluid form

## Claims

1. A starch resin composition comprising:
5 - 95 parts by weight of a thermoplastic resin (X),
95 - 5 parts by weight of a starch substance (Y), and
0.2 - 20 parts by weight of a compatibilizer (Z) which improves an affinity at an interface between the thermoplastic resin (X) and the starch substance (Y), relative to 100 parts by weight of a total amount of the components (X) and (Y).

2. The starch resin composition according to Claim 1, wherein the compatibilizer (Z) is a saturated carboxylic acid, an unsaturated carboxylic acid or a derivative thereof.

3. The starch resin composition according to Claim 1, wherein the compatibilizer (Z) is the thermoplastic resin (X) modified by an unsaturated carboxylic acid or a derivative thereof.

4. The starch resin composition according to Claim 1, wherein the compatibilizer (Z) is the starch substance (Y) modified by an unsaturated carboxylic acid or a derivative thereof.

5. The starch resin composition according to any one of Claims 1 - 4, wherein the starch substance (Y) is formed of at least one material selected from the group consisting of rice, wheat, corn, potato, sweet potato and tapioca.

6. The starch resin composition according to any one of Claims 1 - 4, wherein the starch substance (Y) is raw rice immersed in water for 5 minutes or more.

7. The starch resin composition according to Claim 6, wherein at least one compound selected from the group consisting of salt, sucrose, trehalose, antioxidant, proteolysis promoter and cellulose degradation promoter is dissolved in the water.

8. The starch resin composition according to any one of Claims 1-7, wherein the starch substance (Y) is gelatinized by heating in a presence of water so that starch has α-structure.

9. The starch resin composition according to any one of Claims 1-7, wherein the starch substance (Y) is gelatinized by heating in a presence of water and dehydrated so that starch has α-structure.

10. The starch resin composition according to any one of Claims 1-9, wherein the thermoplastic resin (X) is formed of at least one compound selected from the group consisting of biodegradable polyolefin, biodegradable polyester, biodegradable polyvinyl-alcohol copolymer, biodegradable polysaccharide derivative, and biodegradable polyamide.

11. The starch resin composition according to any one of Claims 1-9, wherein an additive that imparts biodegradability is added to the thermoplastic resin (X).

12. A starch-resin-composition molded product comprising the starch resin composition according to any one of Claims 1 to 11.

13. A starch-resin-composition molded product formed from, as a main material,
5 - 80 parts by weight of the starch resin composition according to any one of Claims 1 to 11, and
95 - 20 parts by weight of the thermoplastic resin (X).

14. A method for producing a starch resin composition comprising:
a material feeding step in which a starting material containing at least a thermoplastic resin (X) and a water-containing starch substance (Y) is fed into a material feeding part of a kneading extruder kept at 140°C or less;
a thermal fluidization treatment step in which the starting material fed is sent to a high-temperature high-pressure part kept at higher pressure than an atmospheric pressure and at higher temperature at which the thermoplastic resin (X) is fluidized to be a water-containing thermal fluid form, and at least a part of the starch substance (Y) present in the water-containing thermal fluid form is gelatinized as gelatinized starch;
a dispersion treatment step in which the water-containing thermal fluid form is kneaded similarly at high temperature and high pressure to gelatinize the rest of the starch substance (Y) and to crush the resultant gelatinized starch as starch particles, and the starch particles are dispersed entirely in the water-containing thermal fluid form to give a starch-dispersed thermal fluid form;
a dehydration treatment step in which the starch-dispersed thermal fluid form is sent to a degassing part kept at an atmospheric pressure or lower and at high temperature at which the starch-dispersed thermal fluid form is fluidized, and water contained in the starch-dispersed thermal fluid form is evaporated to give an anhydrous thermal fluid form;
a discharge step in which the anhydrous thermal fluid form is discharged from a discharge opening of the kneading extruder; and
a molding step in which the discharged anhydrous thermal fluid form is solidified and molded at low temperature at which a thermal fluidity is lost.

15. The method according to Claim 14, further comprising a granulation step in which the starch particles are made finer by passing the anhydrous thermal fluid form through a gap between heat rolls, after the discharge step.

16. A method for producing a starch resin composition comprising:
a kneading step in which a starting material containing at least a thermoplastic resin (X) and a starch substance (Y) is kneaded at temperature at which the thermoplastic resin (X) becomes a thermal fluid form, and the contained starch substance (Y) or starch particles obtained by crushing the starch substance (Y) is dispersed;
a discharge step in which the kneaded thermal fluid form is discharged from a discharge opening of the kneading extruder;
a granulation step in which the discharged thermal fluid form passes through a gap between heat rolls and the dispersed starch substance or starch particles are further made finer; and
a molding step in which the thermal fluid form that underwent the granulation step is solidified and molded at low temperature at which a thermal fluidity is lost.

17. The method according to any one of Claims 14 - 16, further comprising a drawing step in which the anhydrous thermal fluid form or the thermal fluid form is drawn before being solidified and forms a film.
